# EUROPEAN PATENT APPLICATION

(11) **EP 2 019 557 A1**
(43) Date of publication of application: **28.01.2009**
(21) Application number: 07721144.9
(22) Date of filing: 15.05.2007
(51) Int. Cl.: H04Q 7/28, H04M 3/56, H04L 12/18

(54) **METHOD AND APPARATUS FOR IMPLEMENTING MULTI-PARTY COMMUNICATION**

(30) Priority: 16.05.2006 CN 200610080793
(71) Applicant: Huawei Technologies Co., Ltd., Longgang District, Shenzhen Guangdong 518129 (CN)
(72) Inventor: WEN, Changcheng, Shenzhen, Guangdong 518129 (CN); CHEN, Zhenyu, Shenzhen, Guangdong 518129 (CN); YAO, Hao, Shenzhen, Guangdong 518129 (CN); LIU, Huaqing, Shenzhen, Guangdong 518129 (CN)
(74) Representative: Casalonga, Axel
(86) International application number: PCT/CN2007/001571
(87) International publication number: WO 2007/131448

(57) **Abstract**

The present invention discloses a method and apparatus for multiparty communications. The method includes: receiving an access number dialed by a user; creating a conference room for the user and accessing the user to the conference room if the access number is for multiparty communications; and establishing a multiparty communication between the user and other users. The apparatus includes a receiving unit, a judging unit, a conference room creating unit, and a conference establishing unit. With the present invention, multiparty communications can be implemented between various types of terminals in a simple and convenient way.

## Description

This application claims a priority from the Chinese Patent Application No. 200610080793.8, filed with the Chinese Patent Office on May 16, 2006 and entitled "Method for Multiparty Communications", the contents of which are incorporated herein by reference in their entirety.

### Field of the Invention

The present invention relates to communication technologies, and in particular, to a method and apparatus for multiparty communications.

### Background of the Invention

The modem society is based on information. More and more people own telephones and the communication between people relies more and more on communication technologies. For example, using telephones, people can communicate with multiple clients simultaneously without prior arrangements or talk with friends without going outside. The demands for multiparty communications are now explicit.

The existing next generation network (NGN) communication systems, however, are based on point-to-point communication, which gives no possibility for more than two parties to communicate via telephone. Even if some communication systems or terminals allow multiparty communications, the operations are complex and subject to many restrictions.

In the prior art, some teleconferencing systems allow multiparty communications, but those systems require that a user go to a business center of a service provider to subscribe to the service and get an account in advance. Afterwards, the user needs to visit the Web page provided by the service provider or dial a certain number to schedule a conference in a certain period of time and determine those to invite to the conference. In the scheduled period of time, the user can dial into the conferencing system by using a telephone. The conferencing system then assigns conference resources and convenes the conference. In this multiparty communication method, the user has to schedule a conference in advance and the operations are complex. This is inconvenient for the user.

In the prior art, there are also some terminals that support multiparty communications. To start a multiparty communication, a user needs to dial one party and hold the call, then dial a second party and hold the call, then dial other parties and hold the call, and finally perform call convergence. This method for multiparty communications, however, requires special terminals and easily causes errors.

### Summary of the Invention

Embodiments of the present invention provide a method for multiparty communications so that different types of terminals can access a network and communicate in an easy and convenient way.

Embodiments of the present invention also provide an apparatus for multiparty communications so that different types of terminals can access a network and communicate in an easy and convenient way.

A method for multiparty communications includes: receiving an access number dialed by a user; creating a conference room for the user and accessing the user to the conference room if the access number is for multiparty communications; and establishing a multiparty communication between the user and other users.

An apparatus for multiparty communications includes a receiving unit, and further includes: a judging unit, adapted to judge whether an access number dialed by a user and received by the receiving unit is an access number for multiparty communications; a conference room creating unit, adapted to create a conference room for the user and access the user to the conference room according to the judgment of the judging unit; and a conference establishing unit, adapted to establish a multiparty communication between the user and other users via the conference room.

In embodiments of the present invention, a conference room is created according to an access number dialed by a user terminal so that the user can invite other users to have a multiparty communication at the conference room. Compared with prior arts, this method does not require a user to go to a business center of a service provider to subscribe to the service and is applicable to many forms of telephone terminals. The service process is simple and easy to use.

### Brief Description of the Drawings

Figure 1 is a schematic drawing showing the structure of an NGN communication system;

Figure 2 is a flowchart of the method where a user enters a conference room according to an embodiment of the invention;

Figure 3 is a flowchart of the method where a host user operates a conference at a conference room according to an embodiment of the invention;

Figure 4 is a flowchart of the method where a multiparty conversation is established over an NGN or IMS network;

Figure 5 is a schematic diagram showing an apparatus for multiparty communications according to an embodiment of the invention; and

Figure 6 is a schematic diagram showing an apparatus for multiparty communications according to another embodiment of the invention.

### Detailed Description of the Invention

The present invention is described in detail with reference to the accompanying drawings and embodiments.

Embodiments of the invention are applicable to many network systems, for example, next generation network (NGN) and IP multimedia subsystem (IMS). For descriptive purposes, the following assumes that the embodiments are applied to an NGN communication system.

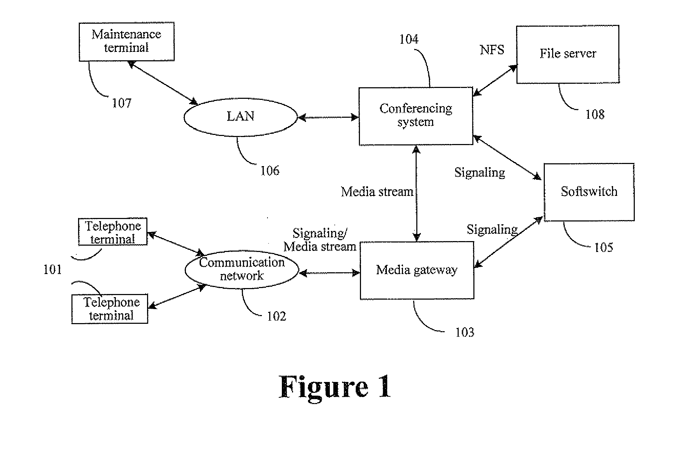

The structure of an NGN communication system is shown in Figure 1. The NGN system 100 includes a teleconferencing system and a softswitching system. The softswitching system is made up of various media gateways and softswitches and provides access for various terminals (such as a telephone terminal). The conferencing system provides services.

The NGN system includes telephone terminals 101, a communication network 102, a media gateway 103, a conferencing system 104, a softswitch 105, a local area network (LAN) 106, a maintenance terminal 107, and a file server 108. The telephone terminals 101 access the conferencing system 104 via the communication network 102 and the media gateway 103. The communication network 102 exchanges a signaling and/or media streams with the media gateway 103. The media gateway 103 exchanges media streams with the conferencing system 104. Between the media gateway 103 and the softswitch 105 and between the softswitch 105 and the conferencing system 104, signaling messages are transmitted. The maintenance terminal 107 is connected to the conferencing system 104 via the LAN 106 to maintain the conference system 104. The conferencing system 104 is connected to the file server 108 so that a terminal user can access files and/or data stored in the file server 108 remotely. Thus a network file system is realized. The conferencing system 104 is a communication system that includes a virtual conference room that can provide multiparty communication functions.

Based on the above system, in embodiments of the invention, the conferencing system establishes a multiparty communication dynamically according to an access number dialed by a user without the need of conference scheduling or service subscription. The method is applicable to both NGN and other systems and is compatible with multiple types of terminals.

A method for multiparty communications implemented in the NGN system 100 includes:

Step 1: A terminal user dials an access number to a conferencing system. The access number is a special access number for multiparty communications.

Step 2: The conferencing system assigns a conference port resource to the user in real time according to the calling number, creates a virtual conference room, and connects the user to the conference room.

Step 3: The terminal user enters the conference room, where the user invites other users to the conference via an interactive voice response (IVR).

Step 4: The conferencing system establishes a multiparty communication between the user and the other users according to the invitation information of the user and assigns conference port resources dynamically when the users join the conference.

Meanwhile, the terminal user may perform, via the IVR, site control functions such as muting, asking a guest to leave, and re-inviting a guest.

In embodiments of the invention, a conference room is created according to the calling number of a user terminal so that the user can invite other users at the conference room to realize multiparty communications. Compared with prior arts, the method provided by embodiments of the invention avoids the need of service subscription in the business center of a service provider or the need of special terminals. Therefore the service process is simple and easy to use.

In addition, the support for user access from various network systems offers compatibility with many types of telephone terminals, which further facilitates the use.

The following details the method provided by embodiments of the invention, with reference to flowcharts where a user enters a conference room and operates a conference at the conference room.

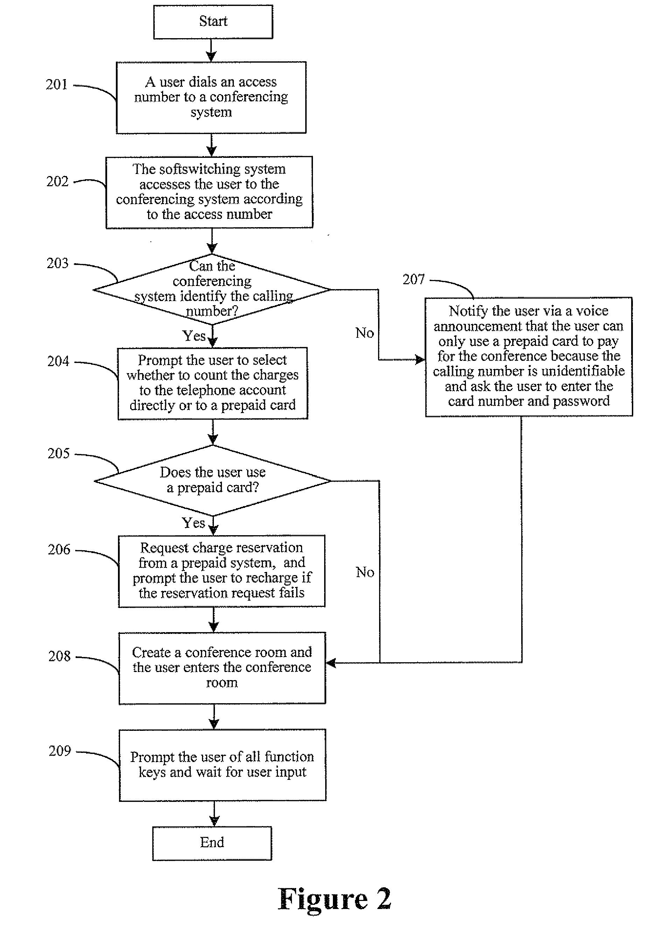

Figure 2 is a flowchart of the method where a user enters a conference room according to an embodiment of the invention. The flowchart includes:

Step 201: A user dials an access number to a conferencing system (that is, the access number for multiparty communications), and a media gateway identifies the access number, which is managed by a home softswitch, and forwards the call signaling of the user to the softswitch. The access number is a number of the conferencing system open to all users for multiparty communications, for example, an open telephone number. The call signaling is initiated by the user, carrying the calling telephone number and the access number to the conferencing system. Therefore, when the call signaling is forwarded to the softswitch and identified, the user is accessed to the conferencing system.

Step 202: The softswitch accesses the user to the conferencing system according to the access number. The conferencing system identifies the user, that is, it judges whether the calling number of the user is identifiable.

Step 203: The conferencing system judges whether the calling number of the user is identifiable. If the calling number is identifiable, step 204 proceeds; if the calling number is not identifiable, step 207 proceeds.

Step 204: The conferencing system exchanges signaling and media streams with the softswitch and media gateway to prompt whether the charges are counted to the telephone account directly or a prepaid card.

Step 205: It is judged whether the user uses a prepaid card. If the user uses a prepaid card, step 206 proceeds; if not, step 208 proceeds.

Step 206: The conferencing system sends a charge reservation request to the home prepaid system of the user. If the request is successful, step 208 proceeds; if the request is unsuccessful, the conferencing system prompts the user to recharge the prepaid card, and step 208 proceeds after the user recharges the prepaid card and the conferencing system succeeds in requesting charge reservation from the prepaid system.

Step 207: The conferencing system plays a voice announcement to the user, notifying the user that the user can only use a prepaid card to pay for the conference because the calling number is unidentifiable, and asking the user to enter the card number and password. After the user enters a prepaid card number and password that are identifiable to the conferencing system, step 208 proceeds.

Step 208: The conferencing system creates a conference room for the user and accesses the user to the conference room as the host of the conference room. The conference room is a virtual conference room which exists in the conferencing system and provides functions including multiparty communications. Then, the charges are counted to the telephone account of the user directly and the system will settle the charges with the user on a regular basis.

Step 209: The conferencing system prompts the user of available function keys and waits for inputs of the user.

As seen from the foregoing process, the conference provided for the user is created after the user dials the access number. The operations are easy.

In addition, in the foregoing process, various types of telephone terminals can access the conferencing system for multiparty communications, which further facilitates the use.

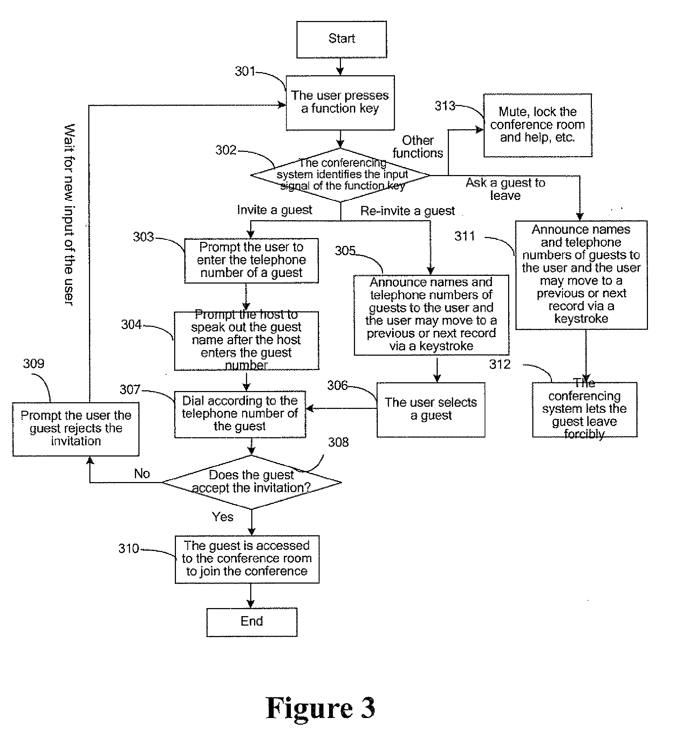

Figure 3 is a flowchart where a host user operates a conference at a conference room according to an embodiment of the invention. The flowchart includes:

Step 301: The host user presses a function key according to the function of each key of the conference room prompted by the conferencing system in step 208.

Step 302: The conferencing system identifies the input signal of the function key pressed by the host user, that is, the conferencing system identifies the action desired by the user, and processes the request accordingly as follows:

if the input signal indicates invitation for a guest user, step 303 proceeds;

if the input signal indicates re-invitation for a guest user, step 305 proceeds;

if the input signal indicates that the host user asks a guest user to leave, step 311 proceeds; and

if the input signal indicates another action requested by the host user, step 313 proceeds.

Step 303: The conferencing system prompts the host user to enter the identity of the guest user to invite (such as a telephone number).

Step 304: After the host user enters the telephone number of the guest user, the conferencing system prompts the host user to enter the name of the guest user, and then step 307 proceeds.

Step 305: The conferencing system prompts the host user to announce the name and telephone number the guest user and meanwhile provides a history record of the list of guest users. The host user may move to a previous or next record via a keystroke to re-invite a guest user.

Step 306: The host user selects a guest user.

Step 307: The conferencing system calls the guest user according to the telephone number announced by the host user or the history record selected.

Step 308: After receiving the telephone invitation, the guest user decides whether to accept the invitation. If the guest user rejects the invitation, step 309 proceeds; if the guest user accepts the invitation, step 310 proceeds.

Step 309: The conferencing system prompts the host user that the guest user rejects the invitation and the host user may perform a new action. The conferencing system waits for the new action of the host user, and the process goes back to step 301.

Step 310: The conferencing system accesses the guest user to the conference room to join the conference with the host user.

Step 311: The conferencing system prompts the host user to announce the name and telephone number of the guest user; the host user may also use the history record of the list of guest users provided by the conferencing system and move to a previous or next record via a keystroke to ask a guest user to leave the conference room.

Step 312: The conferencing system lets the guest user leave the conference room forcibly according to the telephone number announced by the host user or the history record selected, that is, the conferencing system disconnects the connection between the host user and the guest user.

Step 313: The conferencing system performs the action requested by the host user, such as muting, locking the conference room and providing help.

According to the above steps, after a host user enters a conference room, the host user invites other users to a conference via the IVR to carry out a multiparty communication. In addition, the host user may also control the conference site via the IVR, for example, muting, asking a guest to leave, and re-inviting a guest.

Those skilled in the art understand that all or part of the steps in the above method according to the embodiment of the invention can be implemented by hardware under the instruction of a program, which may be stored in a computer readable storage medium, like a read only memory (ROM) or random access memory (RAM), a magnetic disk or a compact disk.

In this embodiment of the invention, a conference room is created dynamically according to the received telephone number of a user terminal so that the user can invite other users at the conference room to realize multiparty communications. Compared with prior arts, the method provided the embodiment of the invention does not require a user to book conference resources or schedule a conference in a conferencing system in advance. Therefore, the service process is simple and easy to use.

In addition, the support for user access from various network systems offers compatibility with many types of telephone terminals, which further facilitates the use.

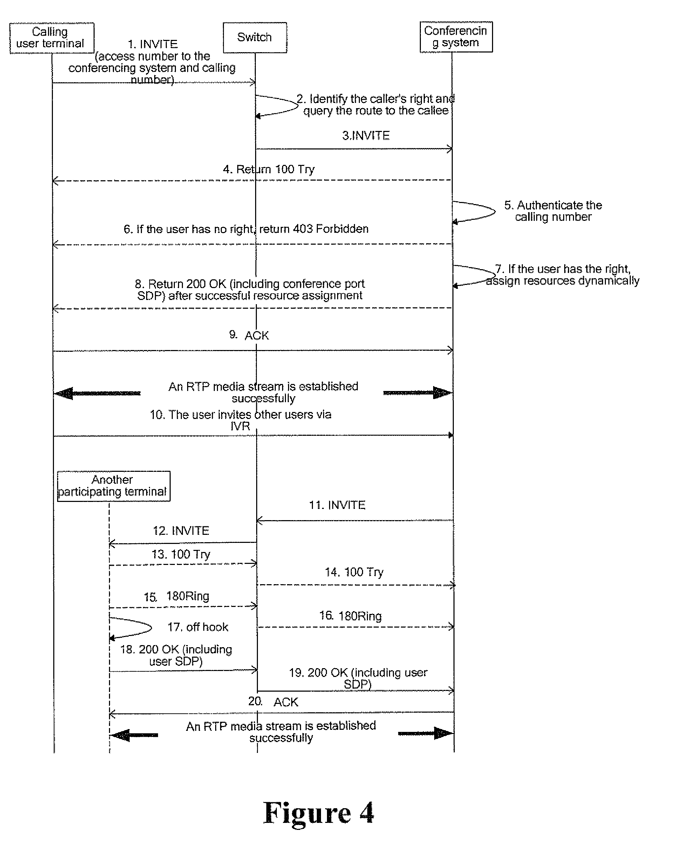

Figure 4 is a flowchart of the method where a multiparty conversation is established over an NGN or IMS network. The flowchart includes:

Step 1: A calling user terminal sends an INVITE message to a switch. The message carries the calling number and the access number to a conferencing system.

Step 2: The switch identifies the caller's right and queries the route to the callee.

Step 3: The switch sends an INVITE message to the conferencing system.

Step 4: The conferencing system sends a 100 Try message to the calling terminal after receiving the INVITE.

Step 5: The conferencing system authenticates the calling number.

Step 6: If the caller has no right, the conferencing system sends a 403 forbidden message to the calling user terminal.

Step 7: If the caller has the right, the conferencing system assigns a port resource to the caller.

Step 8: When a resource is assigned successfully, the conferencing system sends a 200 OK message to the calling user terminal.

Step 9: The calling user terminal sends an Ack message to the conferencing system upon reception of the 200 OK. Now a Realtime Transfer Protocol (RTP) media stream is successfully established between the calling user terminal and the conferencing system.

Step 10: The caller invites other users via the IVR, that is, the caller presses the corresponding function key on the terminal and enters the telephone number of another user to invite according to the voice prompt.

Step 11: The conferencing system sends an INVITE message to the switch according to the received telephone number. The message carries a called number that is the telephone number received by the conferencing system.

Step 12: The switch sends an INVITE message to the participating terminal associated with the telephone number.

Step 13: The participating terminal sends a 100 Try message to the switch.

Step 14: The switch sends a 100 Try message to the conferencing system.

Steps 15-16: The participating terminal rings and sends a 180 Ring message to the conferencing system via the switch.

Step 17: The participating terminal user is off hook.

Steps 18-19: The participating terminal sends a 200 OK message to the conferencing system via the switch.

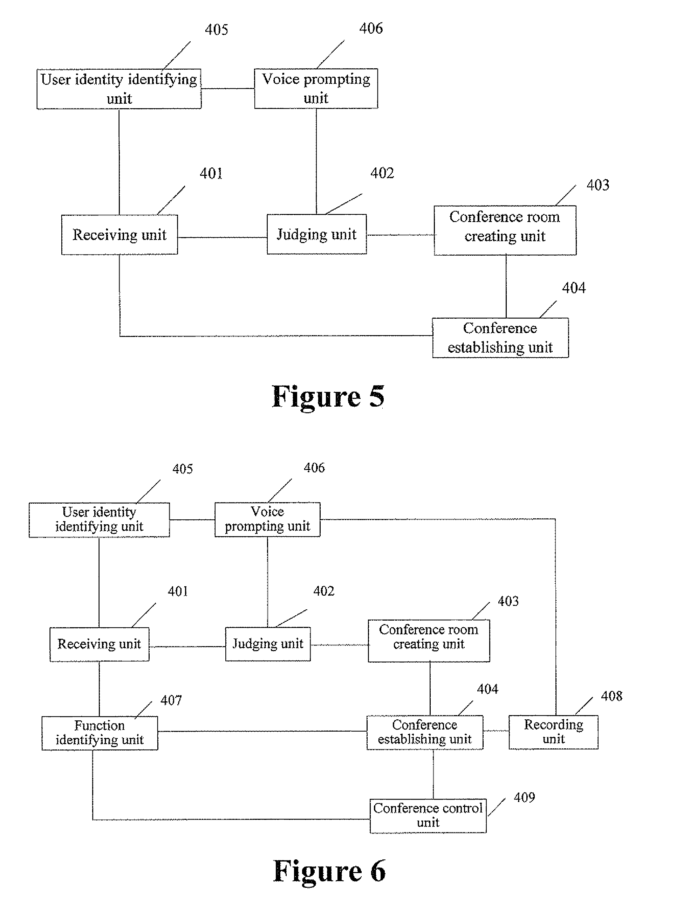

Step 20: The conferencing system sends a 200 OK message to the participating terminal. Now the RTP media stream is successfully established between the conferencing system and the participating terminal. The caller and the participating user can start a conversation. Another embodiment of the invention provides an apparatus for multiparty communications, as shown in Figure 5.

The apparatus includes a receiving unit 401, a judging unit 402, a conference room creating unit 403, and a conference establishing unit 404. The receiving unit 402 is adapted to receive user signals, including the access number dialed by the user on a telephone terminal and the input signal of a function key selected by the user on the telephone terminal; the judging unit 402 is adapted to judge whether the access number dialed by the user and received by the receiving unit 401 is an access number for multiparty communications; if the access number is for multiparty communications, the conference room creating unit 403 creates a conference room for the user and accesses the user to the conference room; if the access number is not for multiparty communications, the conference room creating unit 403 rejects creating a conference room for the user; the conference establishing unit 404 is adapted to establish a multiparty communication between the user and other users via the conference room.

To help users of different payment modes use the apparatus to establish multiparty communications, the apparatus may further include a user identity identifying unit 405 and a voice prompting unit 406. The user identity identifying unit 405 is adapted to identify the identity of an access user. It may determine the user identity according to the calling number received by the receiving unit 401 when the user initiates a call. If the calling number is identifiable, the voice prompting unit 406 prompts the user to decide whether to count charges directly to the telephone account or a prepaid card. The apparatus may charge the user according to the user's choice. The specific process is shown in Figure 2.

The voice prompting unit 406 prompts the user to enter the telephone number of a guest via a voice announcement. The receiving unit 401 receives the guest telephone number entered by the user, and the conference establishing unit 404 dials the telephone number and then accesses the guest to the conference room to join the conference.

Figure 6 shows another apparatus for multiparty communications according to another embodiment of the invention. Unlike the apparatus shown in Figure 5, the apparatus further includes a function identifying unit 407, a recording unit 408 and a conference control unit 409.

The recording unit 408 records the telephone numbers and names of guests that have established a conference connection with the user and the telephone numbers and names of guests leaving the conference. The conference control unit 409 is adapted to control the current conference, including re-inviting a guest, and/or asking a guest to leave, and/or muting, and/or locking the conference room, and/or providing help.

The function identifying unit 407 is adapted to identify the function key signal received by the receiving unit 401. Function keys may be designed according to actual needs. For example, "#", "*" and combinations of keys may be set to indicate different conference requests of the user.

The following function keys can be designed:

(1) the invite key

When identifying a signal of this function key received by the receiving unit 401, the function identifying unit 407 instructs the conference establishing unit 404 to establish a multiparty communication between the user and other users.

(2) the re-invite key

When identifying a signal of this function key received by the receiving unit 401, the function identifying unit 407 instructs the conference control unit 409 to re-invite a guest already leaving the conference.

In this case, the voice prompting unit 406 may announce the telephone numbers and names of the guests leaving the conference recorded by the recording unit 408 and the user selects the names of guests to re-invite; or the voice prompting unit 406 may prompt the user to enter the telephone number or name of a guest to re-invite and then, according to the user input, the conference control unit 409 accesses the re-invited guest to the conference room to join the conference.

(3) the leave key

When identifying a signal of this function key received by the receiving unit 401, the function identifying unit 407 instructs the conference control unit 409 to let a guest leave the conference.

In this case, the voice prompting unit 406 may announce the telephone numbers and names of the participating guests recorded by the recording unit 408 and the user selects the names of guests to leave; or the voice prompting unit 406 may prompt the user to enter the telephone number or name of a guest to leave and then, according to the user input, the conference control unit 409 disconnects the guest to leave and the user and lets the guest leave the conference room.

(4) the mute key

When this key is selected, a participating guest can only hear others but cannot talk at the conference.

(5) the lock key

When this key is selected, no more guests can be invited to the conference.

(6) the help key

When this key is selected, the system needs to provide help information for the user.

The design of function keys in embodiments of the invention, however, is not limited to the above. Other function keys may be set as needed.

From the above description, it is clear that the apparatus provided by embodiments of the invention can establish a multiparty communication conveniently for a user according to the access number dialed by the user terminal, without the need of service subscription in a business center of a service provider in advance.

Although the invention has been described through exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the claims or their equivalents.

## Claims

1. A method for multiparty communications, **characterized by** comprising:
receiving an access number dialed by a user;
creating a conference room for the user and accessing the user to the conference room if the access number is for multiparty communications; and
establishing a multiparty communication between the user and other users.

2. The method of claim 1, before the step of creating a conference room, further comprising:
identifying the identity of the user; and
prompting the user to select a payment mode according to the identity of the user.

3. The method of claim 2, wherein the step of prompting the user to select a payment mode according to the identity of the user comprises:
prompting the user to select whether to count charges directly to a telephone account or a prepaid card.

4. The method of claim 1, wherein the step of creating a conference room and accessing the user to the conference room comprises:
prompting the user of available function keys on a user terminal; and
waiting for input of the user to select a function key.

5. The method of claim 4, wherein the step of establishing a multiparty communication between the user and other users comprises:
receiving an input signal of the function key selected by the user; and
establishing a multiparty communication between the user and other users via an interactive voice response, IVR, according to the input signal of the function keys.

6. The method of claim 5, wherein the step of establishing a multiparty communication between the user and other users via the IVR according to the input signal of the function key comprises:
prompting the user to enter a telephone number of a guest if the input signal of the function key indicates inviting a guest;
receiving the telephone number of the guest entered by the user; and inviting the guest to a conference by dialing the telephone number of the guest.

7. The method of claim 6, wherein the step of establishing a multiparty communication between the user and other users via the IVR according to the input signal of the function key further comprises:
prompting the user to enter a guest name after receiving the telephone number of the guest entered by the user; and
recording telephone numbers and names of guests that have established an connection with the user.

8. The method of claim 7, further comprising:
controlling the conference via the IVR according to the input signal of the function key, comprising: re-inviting a guest, and/or asking a guest to leave, and/or muting, and/or locking the conference room, and/or providing help.

9. The method of claim 8, wherein the step of re-inviting a guest comprises:
announcing a list of guests leaving the conference if the input signal of the function key indicates re-inviting a guest; and
inviting the guest to join the conference again by dialing the telephone number of the guest selected by the user.

10. The method of claim 8 or 9, wherein the step of asking a guest to leave comprises:
announcing a list of guests participating in the conference if the input signal of the function key indicates asking a guest to leave; and
disconnecting the guest according to the telephone number of the guest selected by the user.

11. An apparatus for multiparty communications, comprising a receiving unit, **characterized by** further comprising:
a judging unit, adapted to judge whether an access number dialed by a user and received by the receiving unit is an access number for multiparty communications;
a conference room creating unit, adapted to create a conference room for the user and accessing the user to the conference room according to the judgment of the judging unit; and
a conference establishing unit, adapted to establish a multiparty communication between the user and other users via the conference room.

12. The apparatus of claim 11, further comprising:
a voice prompting unit, adapted to play to the user voice prompt information, which comprises subsequent actions that the user can perform, for example, selecting a payment mode and available function keys on a user terminal.

13. The apparatus of claim 12, further comprising a user identity identifying unit, adapted to identify the identity of the user; and
the voice prompting unit, adapted to prompt the user to select a payment mode according to the identity of the user.

14. The apparatus of claim 12, further comprising:
a recording unit, adapted to record telephone numbers and names of guests that have established a conference connection with the user and telephone numbers and names of guests that have left the conference;
a function identifying unit, adapted to identify a function key signal received by the receiving unit and instruct the voice prompting unit to play prompt information, which comprises telephone numbers and names of guests that have established a conference connection with the user, and/or telephone numbers and names of guests that have left the conference; and
a conference control unit, adapted to control the conference according to the identification result of the function identifying unit, wherein conference control actions comprise: re-inviting a guest, and/or asking a guest to leave, and/or muting, and/or locking the conference room, and/or providing help.
